Europäisches Patentamt

European Patent Office

Office européen des brevets

(11) Veröffentlichungsnummer: **0 673 046 A1**

## EUROPÄISCHE PATENTANMELDUNG

(21) Anmeldenummer: **95107352.7**

(22) Anmeldetag: **21.12.92**

(51) Int. Cl.⁶: **H01H 1/02**, B23K 1/002

Diese Anmeldung ist am 15 - 05 - 1995 als Teilanmeldung zu der unter INID-Kode 60 erwähnten Anmeldung eingereicht worden.

(30) Priorität: **20.12.91 DE 4142374**

(43) Veröffentlichungstag der Anmeldung:
**20.09.95 Patentblatt 95/38**

(60) Veröffentlichungsnummer der früheren Anmeldung nach Art. 76 EPÜ: **0 617 833**

(84) Benannte Vertragsstaaten:
**CH DE ES FR GB GR IT LI PT SE**

(71) Anmelder: **SIEMENS AKTIENGESELLSCHAFT**
**Wittelsbacherplatz 2**
**D-80333 München (DE)**

(72) Erfinder: **Hauner, Franz**
**Baiersdorfer Strasse 6**
**D-91341 Röttenbach (DE)**
Erfinder: **Schneider, Manfred**
**Friesenweg 20**
**D-96215 Lichtenfels (DE)**

(54) **Halbzeug zur Verwendung als Kontaktauflage bei einem elektrischen Schaltgerät und Anordnung zu dessen Herstellung.**

(57) Kontaktauflagen, wie Kontaktstücke, Kontaktbänder oder Kontaktprofile werden üblicherweise mit Hartlot auf Kupfer-Silber-Basis in Form einer ebenen Lotschicht versehen. Über diese Lotschicht wird die Kontaktauflage dann mit einem Kontaktträger verbunden, wozu die Lotschicht aufgeschmolzen werden muß. Wird beim Aufschmelzen die freie Oberfläche der Lotschicht (13, 130) mit einem Material (1, 5, 15) abgedeckt, das mit Silber und Kupfer keine Löslichkeit besitzt, hat die Lotschicht (13, 130) mit Schmelzgefüge ohne mechanische Bearbeitung eine Form, insbesondere Rechteckform mit gleicher oder geringfügig kleinerer Fläche als die Kontaktschicht, mit scharfen Konturen, definierter Dicke und ebener Oberfläche. Bei der zugehörigen Anordnung kann das Material zum Abdecken beim Aufschmelzen des Lotes einen Formkörper (1, 5, 15) unter der auf ihrer Lotseite mit der Lotschicht (13, 130) versehenen Kontaktauflage (10, 12, 100) oder über der auf ihrer Lotseite (12) mit der Lotschicht (13, 130) versehenen Kontaktauflage (10, 100) bilden. Als Materialien für den Formkörper (1, 5, 15) kommen hochschmelzende Metalle, vorzugsweise Tantal, oder eine Keramik in Frage.

FIG 1

Die Erfindung bezieht sich auf Halbzeug zur Verwendung als Kontaktauflage bei einem elektrischen Schaltgerät, insbesondere Kontaktstück, Kontaktband oder Kontaktprofil, mit wenigstens einer Kontaktschicht und einer Lotschicht, bei dem die Lotschicht über ihre gesamte Fläche in weitgehend stoffschlüssiger Verbindung mit der Lotseite der Kontaktauflage steht und ein Schmelzgefüge hat. Unter einer Kontaktauflage werden ein einzelnes Kontaktstück, aber auch Kontaktbänder oder -profile zum Ablängen von einzelnen Kontaktstücken verstanden. Daneben bezieht sich die Erfindung auch auf eine zugehörige Anordnung zur Herstellung eines solchen Halbzeuges.

Durch Formteiltechnik hergestellte Kontaktstücke werden auf den Kontaktträgern von Schaltgeräten üblicherweise durch Hartlöten befestigt. Dazu wird auf die Rückseite der Kontaktstücke oder des als Band vorliegenden Kontaktmaterials das Lot als ebene Schicht aufgebracht, beispielsweise unter Verwendung einer Lotfolie. Liegt die Kontaktauflage zunächst als Kontaktband bzw. -profil vor, von dem später Kontaktstücke abgelängt werden, ist eine Lotschicht zunächst auch durch Walzplattieren erzeugbar. Insbesondere Lotfolien lassen sich in einfacher Weise durch Ultraschall zu einem Lotplättchen ablängen und gleichermaßen auf der Lotseite von Kontaktstücken anheften, wie es in der älteren, aber nachveröffentlichten DE-A-40 24 941 beschrieben ist. Derartig vorbelotete Kontaktauflagen können weitgehend automatisiert weiterverarbeitet und im Rahmen eines integrierten Fertigungsvorganges, z.B. durch induktive Erwärmung und Löten, auf dem Kontaktträger befestigt werden.

Bei letzterem energieinduzierten Prozeß können Probleme dadurch auftreten, daß von der Lotseite Lot über die Schmalseiten des Kontaktstückes hochsteigt und auf die Schaltfläche gelangt. Durch solche unkontrollierbaren Vorgänge kann bei der bestimmungsgemäßen Verwendung des Schaltgerätes das Schaltverhalten der Kontaktauflagen in unerwünschtem Maße beeinflußt werden.

Es wird daher verlangt, daß beim Vorbeloten von Kontaktauflagen das Lot als glatte Schicht aufgebracht wird, wobei die Fläche der Lotschicht im allgemeinen kleiner als die Fläche an der Lotseite der Kontaktauflage ist. Dadurch soll die Benetzung der Kontaktschmalseiten mit Lot verhindert werden.

Speziell für Schaltgeräte der Energietechnik werden üblicherweise Kontaktauflagen mit einer Kontaktmaterialschicht der Konstitution Silbermetall (AgMe) bzw. Silbermetallverbindung (AgMeV), insbesondere auch Silbermetalloxid (AgMeO), verwendet. Häufig bilden derartige Kontaktauflagen einen Zweischichtaufbau, d.h. sie bestehen aus der eigentlichen Kontaktschicht und einer Schicht aus Reinsilber auf der Lotseite. Ein dafür geeignetes Lot ist auf der Basis von Kupfer und Silber, das weiterhin insbesondere Phosphor enthalten kann, bekannt.

Wenn gemäß dem Stand der Technik Lotfolien auf die Lotseiten von Kontaktauflagen aufgebracht werden, kann beim Aufschmelzen des Lotes beobachtet werden, daß das Lot bevorzugt an den Rändern der Lotschicht zuerst schmilzt und sich Luft- oder Gaseinschlüsse zwischen Lotfolie und Konaktstück meist zu einer zentralen Blase auf der Lotseite des Kontaktstückes ausbilden. Zum Beseitigen derartiger für die Weiterverarbeitung der vorbeloteten Kontaktstücke störender Blasen und damit verbundener Unebenheiten auf der Oberfläche der Lotschicht muß das Lot so lange weiter erhitzt werden, bis die Blase durch Druckerhöhung platzt und sich auflöst. Bei derartig hohen Temperaturen läuft im allgemeinen das Lot bis auf die Kontaktseite des Kontaktstückes.

In der GB-A-11 62 887 wird ein Verfahren zum kontinuierlichen Befestigen eines schmalen Lotstreifens auf einem Metallband, beispielsweise einer Kontaktauflage, beschrieben, bei dem der Lotstreifen zur Bildung einer stoffschlüssigen Verbindung mit dem Metallband kurzzeitig aufgeschmolzen wird und daher ein Schmelzgefüge hat. Die Formkontur des Lotstreifens wird beim Aufschmelzen im allgemeinen verloren gehen, wobei zumindest eine konvexe Oberfläche entsteht, die zum Erhalten ebener Oberflächen mechanisch nachbearbeitet werden muß, wodurch Gefügeänderungen entstehen können..

Aus der US-A-22 16 510 ist weiterhin ein Verfahren zur Herstellung von Kontakten bekannt, bei dem aus beloteten Platten Formteile ausgestanzt und weiterverarbeitet werden. Die nach unterschiedlichen Verfahren vorbeloteten Platten werden dabei zur Gewährleistung einer ebenen Oberfläche gewalzt.

Ausgehend von obigem Sachverhalt und letzterem Stand der Technik ist es Aufgabe der Erfindung, ein Halbzeug zur Verwendung bei Kontaktauflagen und eine Anordnung zu dessen Herstellung anzugeben, mit denen eine Benetzung der Kontaktseitenflächen mit Lot sicher vermieden wird.

Die Aufgabe ist erfindungsgemäß bei einem Halbzeug der eingangs genannten Art dadurch gelöst, daß die Lotschicht mit Schmelzgefüge ohne mechanische Bearbeitung eine Form, vorzugsweise Rechteckform mit gleicher oder geringfügig kleinerer Fläche als die Kontaktschicht, mit scharfen Konturen, definierter Dicke und ebener Oberfläche hat. Vorteilhafterweise liegt die Lotschicht weitgehend blasenfrei auf der Lotseite der Kontaktauflage auf und hat zumindest keine Blase, deren Durchmesser größer als die Dicke der Lotschicht ist. Bei einem Zweischichtkontaktstück mit einer Silber-Metalloxidschicht auf der Kontaktseite und einer Reinsilberschicht auf der Lotseite und einem Kupfer-Silber-Hartlot mit einem Gehalt an Phosphor besteht das Schmelzgefüge aus einem ternären Eutektikum und kupfer- oder silberreichen Mischkristallen. Dabei sind die Gebrauchseigenschaften der Lotschicht insbesondere nicht durch angelöstes Silber beeinträchtigt.

Im Rahmen der Erfindung wird bei einer Anordnung zur Herstellung des Halbzeuges eine Lotschicht, beispielsweise als Lotfolie od. dgl., aufgebracht und aufgeschmolzen, wobei beim Aufschmelzen die freie Oberfläche der Lotschicht mit einem Material abgedeckt ist, das mit Silber und Kupfer keine Löslichkeit besitzt. Diese Anordnung kann vorteilhaft sowohl für einzelne Kontaktstücke, aber auch für Kontaktbänder bzw. Profilen angewendet werden.

Dabei kann das Material zum Abdecken der freien Oberfläche der Lotschicht in einer ersten Alternative eine Abdeckung unter der auf ihrer Lotseite mit der Lotschicht versehenen Kontaktauflage bilden. In einer zweiten Alternative des erfindungsgemäßen Verfahrens kann das Material zum Abdecken der freien Oberfläche der Lotschicht eine Abdeckung über der auf ihrer Lotseite mit der Lotschicht versehenen Kontaktauflage bilden. In diesem Fall wird für den Aufschmelzvorgang der Kontakt umgekehrt angeordnet. In beiden Fällen kann die Abdeckung auch durch eine um ihre Achse rotierende Walze gebildet werden, in der ein Kontaktband bzw. -profil einschließlich Lotband durchlaufend geführt ist.

Als Material zur Bildung der Abdeckung kann entweder ein hochschmelzendes Metall, z.B. Tantal (Ta), Molybdän (Mo) oder Wolfram (W), oder aber Keramik verwendet werden. Wesentlich ist dabei neben den thermodynamischen Eigenschaften des Materials, wie die Unlöslichkeit mit Kupfer und Silber, weiterhin die Forderung, keine oder nur eine sehr geringe Benetzbarkeit des Abdeckmaterials mit flüssigem Lot zuzulassen. Damit wird in überraschender Weise erreicht, daß ein Kriechen von flüssigem Lot zu unerwünschten Stellen der Kontaktstücke verhindert wird. Insbesondere wird damit erreicht, daß zumindest die der Lotschicht gegenüberliegende Seite der Kontaktauflage frei von Lot ist. Auch eine Benetzung der Kontaktschmalseiten mit flüssigem Lot kann damit weitestgehend ausgeschlossen werden.

Die Erfindung hat sich insbesondere beim Beloten von Zweischicht-Kontaktstücken bewährt, die aus einer Silber-Metalloxid-Schicht auf der Kontaktseite und aus einer Reinsilberschicht auf der Lotseite bestehen und die mit einem phosphorhaltigen Lot, z.B. L-AgI5P, belotet werden. Dabei hat es sich als besonders geeignet erwiesen, das Aufschmelzen durch induktive Erwärmung vorzunehmen, womit eine lokal gezielte Erwärmung erreicht wird und wobei die Temperaturzeitkurve zur Prozeßkontrolle dienen kann. Es ist aber auch eine Ofenerwärmung möglich, wenn die Haltezeit entsprechend kurz gewählt wird. Weiterhin bieten sich für eine schnelle und lokale Erwärmung ein Laser oder auch eine Hochleistungslampe an. In allen Fällen erfolgt das Aufschmelzen der Lotschicht zweckmäßigerweise unter Schutzgas, vorzugsweise unter Edelgas oder Stickstoff.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen

Figur 1    ein erstes Beispiel zur Verdeutlichung einer Anordnung mit einer Abdeckung unter einem beloteten Kontaktstück,

Figur 2    das gemäß Figur 1 belotete Kontaktstück in Unteransicht,

Figur 3    ein Temperatur-Zeit-Diagramm bei einer Anordnung gemäß Figur 1,

Figur 4    ein Beispiel für eine zu Figur 1 alternative Vorgehensweise mit einer Abdeckung auf dem beloteten Kontaktstück,

Figur 5    ein zu Figur 1 entsprechendes Beispiel zur Herstellung von Kontaktbändern bzw. -profilen und

Figur 6    das Mikrogefüge einer Lotschicht bei einem Halbzeug für Kontaktauflagen.

Die Figuren werden teilweise gemeinsam beschrieben:

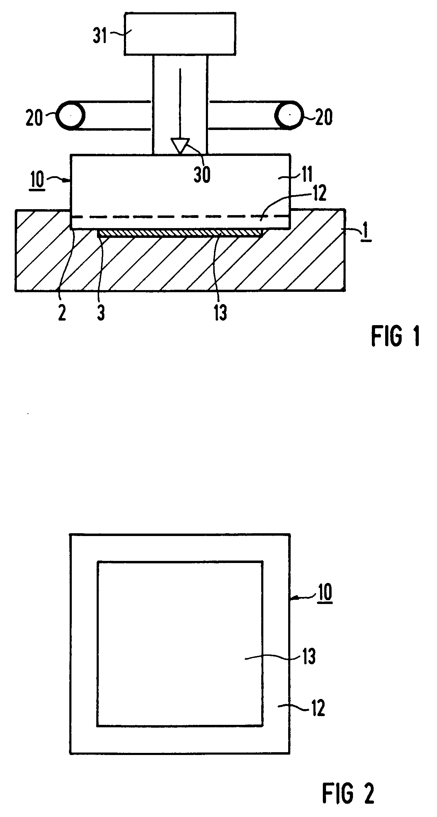

In Figur 1 kennzeichnet 1 einen Formkörper aus Tantal, der eine Unterlage für ein mit einer ebenen Schicht 13 zu belotendes Kontaktstück 10 bildet. Dabei ist die Unterlage 1 an ihrer Oberseite mit Aussparungen 2 und 3 profiliert, wobei die Aussparung 2 an Größe und Form des Kontaktstückes 10 und die Aussparung 3 an Größe und Form der Lotschicht 13 angepaßt ist.

Das Kontaktstück 10 ist als Zweischichtkontaktstück ausgebildet und hat als Kontaktauflage eine Schicht 11 aus Silbermetalloxid, beispielsweise $AgSnO_2Bi_2O_3CuO$. Da dieses Material nicht lötfähig ist, wird bereits bei der im allgemeinen sintertechnischen Herstellung des Kontaktstückes 10 dessen Unterseite mit einer Reinsilberschicht 12 versehen, welche gut lötbar ist. Auf die Reinsilberschicht 12 wird die Lotschicht 13 aufgebracht, mittels der später das Kontaktstück 10 zur bestimmungsgemäßen Verwendung an einen (nichtdargestellten) Kontaktträger eines Schaltgerätes befestigt werden kann. Insbesondere wird zur Bildung der Lotschicht 13 eine Folie aus einem geeigneten Hartlot auf CuAg-Basis, insbesondere L-AgI5P (sog. Silfos-Lot), verwendet, das einen Schmelzbereich zwischen 650 und 800 °C und eine Arbeitstemperatur von ca. 710 °C hat.

Eine derartige Lotfolie 13 kann in geeigneter Größe von einem durchgehenden Band abgelängt werden und wird in die Aussparung 3 der Unterlage 1 eingefügt. Darauf wird das Kontaktstück 10 mit seiner Reinsilberschicht 12 eingesetzt, so daß die Unterseite dicht auf der Lotfolie 13 aufliegt. Um dies zu gewährleisten, kommt es auf exakte Maßhaltigkeit bzw. Anpassung der entsprechenden Aussparungen 2 und 3 in der Unterlage 1 an.

Aus Figur 2 ist die Geometrie des fertig beloteten Kontaktstückes 10 in Rechteckform ersichtlich: Die Reinsilberschicht 12 hat eine größere Fläche als die darauf aufgebrachte Lotschicht 13 mit einem von Lot freien Randbereich. Wesentlich ist dabei insbesondere, daß die Lotschicht 13 mit ihrer Oberfläche eben ist, daß keine zentrale Blase zwischen Lotschicht 13 und Silberschicht 12 entsteht und daß die fertige Lotschicht 13 durchgehend eben mit konstanter Dicke und scharfen Konturen von definierter Geometrie ausgebildet ist. Insbesondere letztere Nebenbedingungen können im Normalfall beim Aufschmelzen einer Lotfolie 13 verlorengehen. Es kann sich dann flüssiges Lot über die Silberschicht 12 undefiniert über die Kanten hinweg ausbreiten und auch zu einer Benetzung der Seitenflächen des Kontaktstückes 10 mit Lot kommen.

Die Unterlage 1 gemäß Figur 1 mit den Aussparungen 2 und 3 vermeidet letzteren unerwünschten Effekt. Dabei ist wichtig, daß das Tantal selbst für flüssiges Lot so gut wie keine Benetzbarkeit aufweist. Weiterhin hat Tantal keine Löslichkeit für Silber und Kupfer. Ein sich theoretisch bildendes Tantalphosphit hat einen hohen Schmelzpunkt, so daß es unschädlich ist.

In Figur 1 sind zum Aufschmelzen der Lotschicht 13 oberhalb des Kontaktstückes 10 Windungen eines Induktors 20 angeordnet. Damit läßt sich eine schnelle und gezielte Erwärmung der Anordnung mit dem Kontaktstück 10 und der Lotfolie 13 erreichen. Zur Prozeßkontrolle wird ein Temperatursensor 30 auf die Oberfläche des Kontaktstückes 10 gerichtet. Der Temperatursensor 30 arbeitet beispielsweise nach dem Infrarotstrahlungsprinzip. Weiterhin ist noch ein Gewicht 31 oberhalb des Induktors 20 vorhanden, mit dem die Anordnung aus Kontaktstück 10 und Lotschicht 13 über ein nicht näher bezeichnetes Zwischenstück belastet wird, um einen guten Wärmeübergang zwischen Kontaktstück 10, Lotfolie 13 und Tantal-Unterlage 1 zu erzielen.

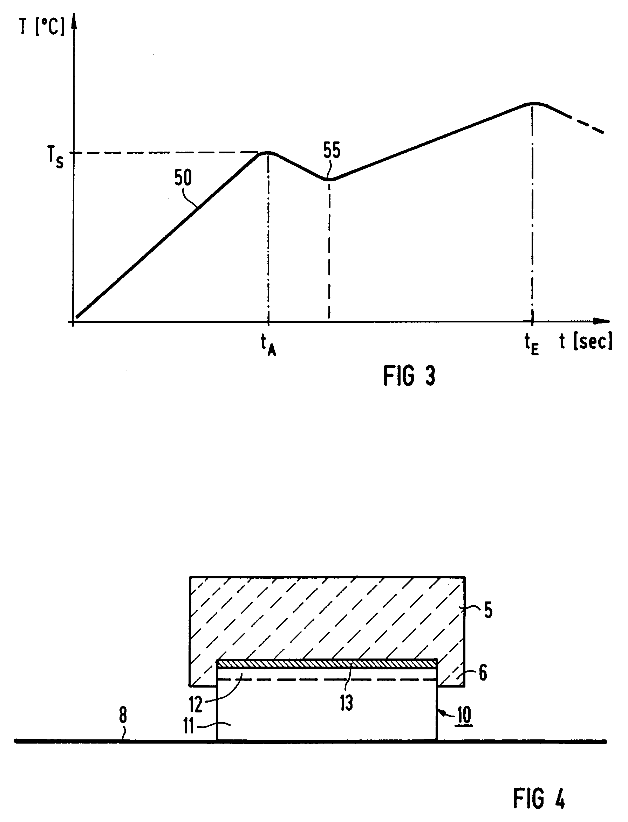

Aus Figur 3 ist die Temperaturführung im einzelnen erkennbar. Durch die mittels des an eine Wechselstromquelle angeschlossenen Induktors 20 im metallischen Werkstoff hervorgerufenen Wirbelströme erfolgt zunächst eine Erwärmung des Kontaktstückes 11 mit in etwa gleichmäßigem Temperaturanstieg. Wird bei $t_A$ die untere Temperatur des Schmelzbereiches des verwendeten Lotes - und zwar ca. $T_S$ = 650°C beim Silfos-Lot - erreicht, tritt in der Zeit-Temperatur-Kurve 50 eine Senke 55 auf, da Schmelzwärme benötigt wird und ein Wärmeausgleich zwischen dem wärmeren Kontaktstück 10 und der kälteren Tantalunterlage 1 erfolgt. Anschließend erwärmt sich die Anordnung: Kontaktstück 10-Lotschicht 13-Tantalunterlage 1 mit langsamerer Aufheizgeschwindigkeit. Bei der Zeit $t_E$, bei der die obere Temperatur des Schmelzbereiches, d.h. die Liquiduslinie im Zustandsdiagramm, im allgemeinen noch nicht erreicht ist, sondern man sich vielmehr bei der Arbeitstemperatur des verwendeten Lotes befindet, wird abgeschaltet, so daß die gesamte Anordnung abkühlt.

Durch die Temperaturkurve $T = f(t)$ läßt sich der Prozeßverlauf mit Aufschmelzen und Anschmelzen der Lotschicht 13 regeln. Insbesondere durch die induktive Erwärmung ist dabei vorteilhafterweise der rasche Temperaturanstieg zunächst im Kontaktstück erreicht. Das Aufschmelzen des Lotes und Anschmelzen der Lotschicht 13 erfolgt dann in kürzester Zeit. Da weiterhin durch die Profilierungen 2 und 3 in der Tantalunterlage 1 Barrieren gebildet werden, kann praktisch kein Lot auf die Seitenflächen des Kontaktstückes 10 gelangen.

In Figur 4 ist das Kontaktstück 10 gemäß Figur 1 in umgekehrter Orientierung dargestellt. Dies bedeutet, daß sich an der Unterseite die Kontaktauflage 11 und an der Oberseite die Reinsilberschicht 12 befindet. Auf die Silberschicht 1 ist eine Hartlotfolie zur Bildung der Lotschicht 13 gelegt und darüber eine Abdeckung 5 mit Randprofil 6 aufgebracht. Die gesamte Anordnung befindet sich auf einem Band 8, das als Durchlaufband durch einen Wärmeofen geführt werden kann.

Bei der Anordnung gemäß Figur 4 bildet die Abdeckung 5 der Lotschicht 13 eine Auflage für das Kontaktstück 10 und besteht in diesem Fall beispielsweise aus Keramik, die von dem Lot nicht benetzt wird und keine Löslichkeit für Kupfer und Silber besitzt. Vorteilhaft bei dieser Anordnung ist, daß Gase durch das flüssige Lot nach oben entweichen können.

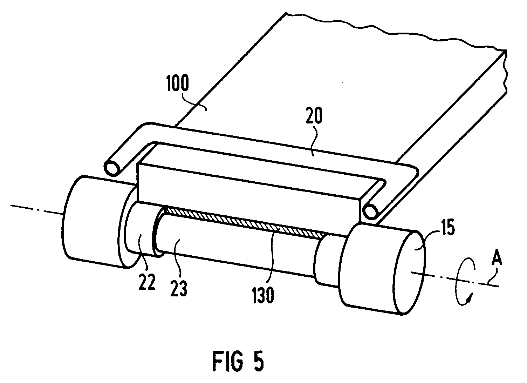

In Figur 5 ist eine um ihre Mittelachse A drehbare Walze 15 vorhanden, die dort als Unterlage für ein Kontaktband 100 dient. Das Kontaktband 100 wird beispielsweise durch Strangpressen eines Pulverrohlings hergestellt und durch Walzplattieren mit einem Lotband 130 verbunden. Das Kontaktband 100 einschließlich Lotband 130 kann auch profilartig ausgebildet sein. Von derartigen Bändern oder Profilen lassen sich später zur bestimmungsgemäßen Verwendung Kontaktstücke ablängen. Die Walze 15 hat in ihrer Oberfläche Aussparungen 22 und 23 zur Aufnahme von Kontaktband 100 und Lotband 130, wozu ein Induktor 20 gemäß Figur 1 vorhanden ist. Bei Rotation der aus hochschmelzendem Metall oder Keramik bestehenden Walze 15 wird der im Wirkungsbereich des Induktors 20 liegende Lotabschnitt als ebene Schicht aufgeschmolzen, wobei seitlich wiederum die exakt definierte Kontur eingehalten wird.

In Figur 5 ist die Walze 15 als Unterlage für das durchlaufende Kontaktband 100 mit Lotschicht 130 dargestellt. Bei umgekehrter Anordnung kann das Kontaktband 100 mit Lotschicht 130 auch unterhalb der Walze 15 durchlaufen. In beiden Fällen ist die Funktion einer Abdeckung gewährleistet.

Der Vorbelotungsprozeß mit dem Aufschmelzen des Lotes findet in allen Beispielen unter Schutzgas, vorzugsweise Edelgas wie insbesondere Argon und Helium oder unter Stickstoff, statt. Im Ergebnis entsteht dabei ein Halbzeug, bei dem die Lotschicht ein Schmelzgefüge hat. Da die Kontaktauflage vorzugsweise pulvermetallurgisch hergestellt wird, haben die Kontaktschicht - und bei einem Zwei-Schichten-Aufbau auch dessen lotfähige Silberschicht - ein Sintergefüge und die Lotschicht ein Schmelzgefüge. Eine lichtmikroskopische Darstellung zeigt dabei einen scharfen Phasenübergang zwischen den Schichten, wobei aber ein fester Materialverbund besteht. Ein störendes Anlösen des im Kontakt vorhandenen Silbers tritt praktisch nicht auf. Insbesondere die Lotoberfläche ist dann frei von Fehlern.

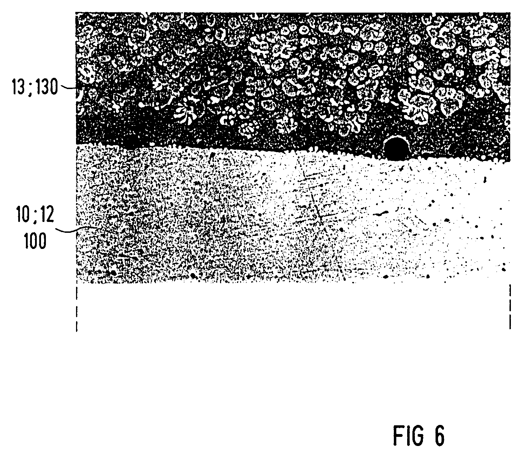

Aus Figur 6 wird deutlich, daß die aufgeschmolzene Lotschicht in stoffschlüssiger Verbindung mit der Lotseite der Kontaktauflage steht und ein Schmelzgefüge hat. Durch die nur kurzeitige Erwärmung ist Silber auf der Lotseite des Kontaktstückes nur geringfügig angelöst. Allenfalls im Übergangsbereich bis zu einer Dicke von maximal einem Drittel der Lotschicht können sich Silberdendriten ausbilden. Vereinzelt noch vorhandene Gaseinschlüsse sind so klein, daß sie die Oberfläche der Lotschicht nicht beeinflussen und daher nicht stören.

Die Lotschicht 13 bzw. 130 ist gemäß Figur 6 weitgehend frei von Silberdendriten. Das Gefüge der Lotschicht besteht entsprechend dem Zustandsdiagramm Cu-Ag-P im wesentlichen aus einem ternären Eutektikum und weiterhin aus kupfer- oder silberreichen Mischkristallen. Durch das gezielte Aufschmelzen der Lotschicht unterhalb der Liquiduslinie im Zustandsdiagramm sind die Gebrauchseigenschaften des Lotes ohne Änderung der Arbeitstemperatur erhalten.

In gleicher Weise wie bei den beschriebenen Verfahren können auch Kontaktauflagen auf der Basis von Silber-Metall, beispielsweise Silber-Nikkel, oder auf der Basis anderer Silber-Metallverbindungen mit dafür geeignetem Lot beschichtet werden. Statt einer Lotfolie können gegebenenfalls auch Lotpasten zur Bildung der Lotschicht verwendet werden. Als Material für die Abdeckung unter oder über der Kontaktauflage können neben Tantal oder Keramik auch Wolfram oder Molybdän oder andere geeignete Metalle verwendet werden.

**Patentansprüche**

1. Halbzeug zur Verwendung als Kontaktauflage für ein elektrisches Schaltgerät, insbesondere als Kontaktstück, Kontaktband oder -profil, mit wenigstens einer Kontaktschicht und einer Lotschicht, wobei die Lotschicht (13, 130) über ihre gesamte Fläche in weitgehend stoffschlüssiger Verbindung mit der Lotseite der Kontaktauflage (10, 12; 120) steht und ein Schmelzgefüge hat, **dadurch gekennzeichnet,** daß die Lotschicht (13, 130) mit Schmelzgefüge ohne mechanische Bearbeitung eine Form, vorzugsweise Rechteckform mit gleicher oder geringfügig kleinerer Fläche als die Kontaktschicht, mit scharfen Konturen, definierter Dicke und ebener Oberfläche hat.

2. Halbzeug nach Anspruch 1, **dadurch gekennzeichnet,** daß auf der Lotseite der Kontaktauflage (10, 12; 100) ein lotfreier Randbereich mit scharfer Kontur vorhanden ist.

3. Halbzeug nach Anspruch 1, **dadurch gekennzeichnet,** daß die Lotschicht (13, 130) sich weitgehend blasenfrei auf der Lotseite der Kontaktauflage (10, 12; 100) befindet und zumindest keine Blase, deren Durchmesser größer ist als die Dicke der Lotschicht (13, 130) ist, hat.

4. Halbzeug nach Anspruch 1 oder Anspruch 2, **dadurch gekennzeichnet,** daß zumindest die der Lotschicht (13, 130) gegenüberliegende Seite der Kontaktauflage (10, 12; 100) frei von Lot ist.

5. Halbzeug nach Anspruch 4, **dadurch gekennzeichnet,** daß auch die Seitenflächen der Kontaktauflage (10, 12; 100) frei von Lot sind.

6. Halbzeug nach einem der Ansprüche 1 bis 5, **dadurch gekennzeichnet,** daß die Kontaktauflage (10, 12, 100) ein Sintergefüge aufweist.

7. Halbzeug nach einem der Ansprüche 1 bis 5, **dadurch gekennzeichnet,** daß die Kontaktauflage ein Zweischichtkontaktstück (11, 12) ist.

8. Halbzeug nach Anspruch 7, **dadurch gekennzeichnet,** daß die Kontaktauflage (10) eine Silber-Metalloxid(AgMeO)-Schicht (11) an der Kontaktseite und eine Reinsilberschicht (12) an der Lotseite besitzt.

9. Halbzeug nach Anspruch 8, **dadurch gegekennzeichnet,** daß die Reinsilberschicht (12) allenfalls geringfügig angelöst ist, und daß Silberdendriten bis höchstens zu einem Drittel der Dicke der Lotschicht (13) vorliegen.

10. Halbzeug nach einem der Ansprüche 1 bis 9, **dadurch gekennzeichnet,** daß die Lotschicht (13, 130) ein Hartlot auf der Basis von Kupfer und Silber mit einem Gehalt an Phosphor ist (sog. Silfos-Lot) und daß das Schmelzgefüge aus einem ternären Eutektikum und kupferund/oder silberreichen Mischkristallen besteht.

11. Anordnung zur Herstellung eines Halbzeuges nach Anspruch 1 oder einem der Ansprüche 2 bis 10 mit einer Vorrichtung zum Aufschmelzen einer Lotschicht auf der Rückseite einer Kontaktauflage, **dadurch gekennzeichnet,** daß die Aufschmelzvorrichtung (20) Mittel (1, 5, 15) zum Abdecken der freien Oberfläche der Lotschicht aufweist.

12. Anordnung nach Anspruch 11, **dadurch gekennzeichnet,** daß die Abdeckmittel einen Formkörper (1, 5, 15) aus hochschmelzendem Metall oder Keramik bilden.

FIG 1

FIG 2

FIG 3

FIG 4

FIG 5

13 ; 130

10 ; 12
100

FIG 6

| | Europäisches Patentamt | EUROPÄISCHER RECHERCHENBERICHT | Nummer der Anmeldung EP 95 10 7352 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-25 40 755 (ATOMIC ENERGY OF CANADA LTD) * Ansprüche 1,2,5; Abbildung 1 * --- | 1,8 | H01H1/02 B23K1/002 |
| A | EP-A-0 283 536 (INOVAN GMBH) * Ansprüche 1,4,6 * --- | 1,8-10 | |
| A | US-A-4 685 608 (KUJAS) * das ganze Dokument * --- | 1-10 | |
| A | US-A-2 216 510 (BURNS) * das ganze Dokument * ----- | 1-10 | |

| RECHERCHIERTE SACHGEBIETE (Int.Cl.5) |
|---|
| H01H B23K |

Der vorliegende Recherchenbericht wurde für alle Patentansprüche erstellt

| Recherchenort | Abschlußdatum der Recherche | Prüfer |
|---|---|---|
| DEN HAAG | 30.Juni 1995 | Herbreteau, D |